# EUROPÄISCHE PATENTANMELDUNG

(11) **EP 2 875 793 A1**
(43) Veröffentlichungstag der Anmeldung: **27.05.2015**
(21) Anmeldenummer: 14003866.2
(22) Anmeldetag: 17.11.2014
(51) Int. Cl.: A61C 9/00, A61C 8/00

(54) **SCANKÖRPER**

(30) Priorität: 20.11.2013 AT 8982013
(71) Anmelder: STEGER, Heinrich, 39031 Bruneck (IT)
(72) Erfinder: STEGER, Heinrich, 39031 Bruneck (IT)
(74) Vertreter: Gangl, Markus

(57) **Zusammenfassung**

Scanbody geeignet zur Bestimmung einer Lage eines Zahnimplantates in einem Kiefer mit Hilfe eines Scanners (4), wobei der Scanbody (1) über wenigstens eine Scanfläche (2) zur Detektion durch den Scanner (4) verfügt, wobei die wenigstens eine Scanfläche (2) aus Metall gefertigt ist und dass die wenigstens eine Scanfläche (2) durch anodische Oxidation behandelt ist.

## Beschreibung

Die vorliegende Erfindung betrifft einen Scanbody mit den Merkmalen des Oberbegriffs des Anspruchs 1 sowie ein Verfahren zur Herstellung eines derartigen Scanbodys.

Gattungsgemäße Scanbodies dienen zur Bestimmung einer Lage eines Zahnimplantates in einem Kiefer mithilfe eines Scanners. Dabei wird in der Regel ein Abdruck eines Kiefers, welcher das Zahnimplantat enthält, erstellt. Gewöhnlich wird für die Modellierung des Zahnimplantats ein sogenanntes Laborimplantat verwendet. Diese Laborimplantate weisen die gleiche geometrische Anschlussform wie die zugehörigen Zahnimplantate auf, sind aber erheblich kostengünstiger, da sie nicht zum Einsetzen in einen menschlichen Kiefer geeignet sein müssen.

Der Scanbody wird dann an dem Laborimplantat befestigt und mit einem optischen Scanner untersucht. Dabei detektiert der optische Scanner die Lage von Scanflächen am Scanbody und schließt so auf die genaue Lage von Scanbody und Laborimplantat und folglich die genaue Lage des Zahnimplantats im Kiefer. Diese Information ist für den Zahntechniker wichtig für die möglichst naturgetreue Nachbildung eines zu imitierenden Zahnes.

Es ist aber durchaus auch möglich die Lage eines Zahnimplantats direkt im Kiefer zu bestimmen, ohne einen Abdruck zu erstellen. Dies kann zum Beispiel mit einem Handscanner durchgeführt werden.

Bei der Wahl des Materials für den Scanbody stehen im Prinzip Metalle oder Kunststoffe zur Auswahl. Im Normalfall werden Scanbodys (auch: Scan Marker) aus rostfreiem Stahl spanend hergestellt. Kunststoffe sind nicht optimal geeignet, da sie wegen ihrer mechanischen Eigenschaften die genauen Maße, die von gattungsgemäßen Scanbodies gefordert werden, nicht über längere Zeit einhalten können. Nachteilig an metallischen Scanbodies ist, dass sie eine reflektierende Oberfläche aufweisen, die für gängige Scanner schwer zu detektieren ist. Um dieses Problem zu umgehen, werden meist Scansprays eingesetzt. Diese verleihen einerseits dem Scanner eine geeignete - zumeist weiße - Farbe, haben aber den Nachteil, dass eine Schicht aus Scanspray auf den Scanflächen des Scanbodys haften bleibt und auf diese Weise geometrische Veränderungen des Scanbodys nach sich gezogen werden. Dadurch, dass in verschiedenen Fällen von den Bedienern verschieden dicke Schichten von Scanspray aufgetragen werden, ist dies besonders nachteilig, da nicht nur ein systematischer Messfehler entsteht sondern die Geometrie des Scanbodys sich vollkommen unkontrolliert verändert.

Aufgabe der Erfindung ist es, einen Scanbody bereitzustellen, der ohne die Verwendung von Scanspray über lange Zeit genaue Messergebnisse bei der Bestimmung der Lage von Zahnimplantaten bzw. Laborimplantaten ermöglicht. Des Weiteren soll ein Verfahren zur Herstellung eines derartigen Scanbodys bereitgestellt werden.

Diese Aufgabe wird durch einen Scanbody mit den Merkmalen des Anspruchs 1 sowie ein Verfahren mit den Merkmalen des Anspruchs 6 gelöst.

Denn indem die wenigstens eine Scanfläche des Scanbodys aus Metall gefertigt ist und durch anodische Oxidation behandelt ist, ergibt sich eine widerstandsfähige Oberfläche, die so gestaltet werden kann, dass sie von gängigen Scannern leicht erkennbar sind. Insbesondere ist die wenigstens eine Scanfläche eines erfindungsgemäßen Scankörpers deshalb leichter vom Scanner erkennbar, da durch die anodische Oxidation ein Mattierungseffekt eintritt. Der Scanner hat dann also nicht mit störenden Reflexionen zu kämpfen.

Bei der anodischen Oxidation von Metallen wird durch das Einbringen des Werkstücks in ein geeignetes Elektrolyt und das Anlegen einer Spannung eine Oxidschicht auf dem Werkstück erzielt. Wird dieses Verfahren bei einem Werkstück aus Aluminium oder einer Aluminiumlegierung angewandt, so spricht man von der elektrolytischen Oxidation von Aluminium, oder kurz einem Eloxal-Verfahren.

Weitere vorteilhafte Ausführungsformen der Erfindung sind in den abhängigen Ansprüchen definiert.

Es kann vorgesehen sein, dass die wenigstens eine Scanfläche aus - vorzugsweise im Wesentlichen reinem - Aluminium oder einer Aluminiumlegierung gefertigt ist. Aluminium ist gegenüber dem standardmäßig verwendeten rostfreien Stahl kostengünstiger und leichter zu verarbeiten.

Um gängigen Scannern so gut wie möglich entgegenzukommen, kann vorgesehen sein, dass die wenigstens eine Scanfläche mittels der anodischen Oxidation bzw. dem Eloxal-Verfahren im Wesentlichen weiß gefärbt ist.

Um die Maße des Scanbodys so genau wie möglich kontrollieren zu können, ist bevorzugt vorgesehen, dass der Scanbody einstückig gefertigt wird.

Gut kontrollierte Maße des Scanbodys können außerdem erreicht werden, indem der Scanbody durch Drehen und/oder Fräsen gefertigt wird.

Für eine einfache und zugleich sichere Befestigung des Scanbodys an einem Zahnimplantat bzw. einem Laborimplantat, kann vorgesehen sein, dass der Scanbody eine Ausnehmung aufweist. Der Scanbody kann dann mittels einer durch die Ausnehmung tretenden Schraube am Zahnimplantat bzw. Laborimplantat befestigt werden.

In einer bevorzugten Ausführungsform wird die wenigstens eine Scanfläche durch Sandstrahlen behandelt, was zu einer weiteren Mattierung der wenigstens einen Scanfläche beitragen kann. Bevorzugt wird das Sandstrahlen vor der anodischen Oxidation bzw. dem Eloxal-Verfahren durchgeführt.

Weitere Vorteile und Einzelheiten der Erfindung ergeben sich anhand der Figuren sowie der dazugehörigen Figurenbeschreibung. Des Weiteren wird ein Beispiel für die Durchführung der anodischen Oxidation gegeben. Es zeigen
- Fig. 1a bis 1c: perspektivische Darstellungen eines auf einem Abdruck eines Kiefers montierten Scanbodys,
- Fig. 2a bis 2d: eine Seitenansicht, eine Vorderansicht, eine Draufsicht sowie eine perspektivische Darstellung eines erfindungsgemäßen Scanbodys sowie
- Fig. 3a und 3b: Darstellungen eines optischen Scanners zur Detektion der Lage des Scanbodys.

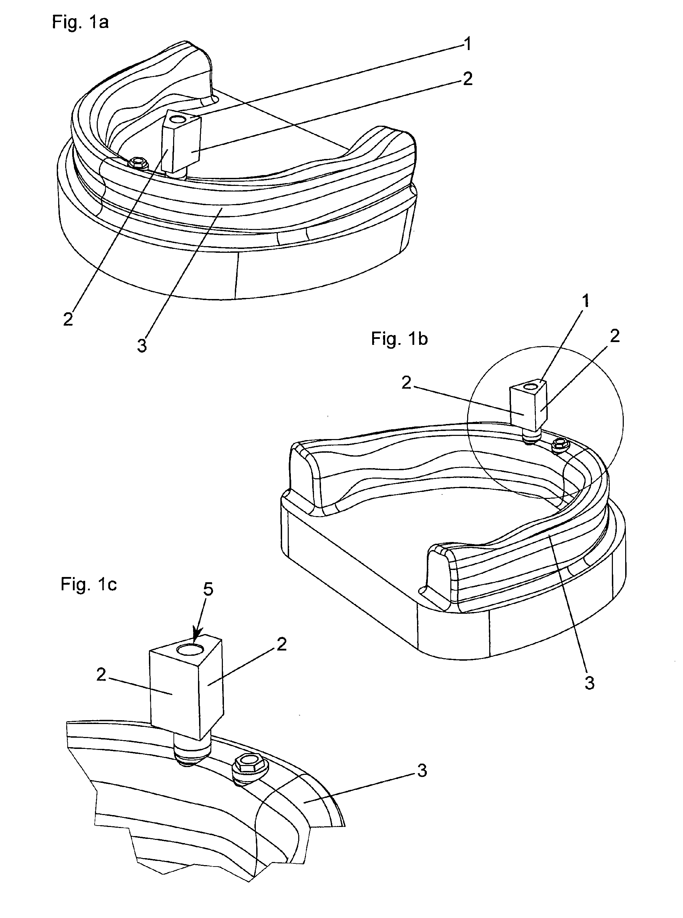

Figur 1 a zeigt eine perspektivische Darstellung eines Scanbodys 1 und eines Abdruckmodells 3 eines Kiefers mit zwei Laborimplantaten, wobei der Scanbody 1 auf einem der Laborimplantate befestigt ist. Der Scanbody 1 verfügt über vier Scanflächen 2, wovon in dieser Darstellung zwei erkennbar sind.

Figur 1b zeigt eine andere perspektivische Darstellung des Gegenstands aus Figur 1a. Hierbei sind die anderen beiden Scanflächen 2 des Scanbodys 1 erkennbar.

In Figur 1c ist eine Detaildarstellung aus Figur 1b gezeigt (dort durch einen Kreis verdeutlicht). Neben den beiden Scanflächen 2 ist nun auch die zylindrische Ausnehmung 5 erkennbar. Mithilfe einer durch die Ausnehmung 5 geführte Schraube ist der Scanbody 1 an dem Laborimplantat befestigt. Die Art der Befestigung ist jedoch für die vorliegende Erfindung nicht wichtig und dem Fachmann an sich bekannt.

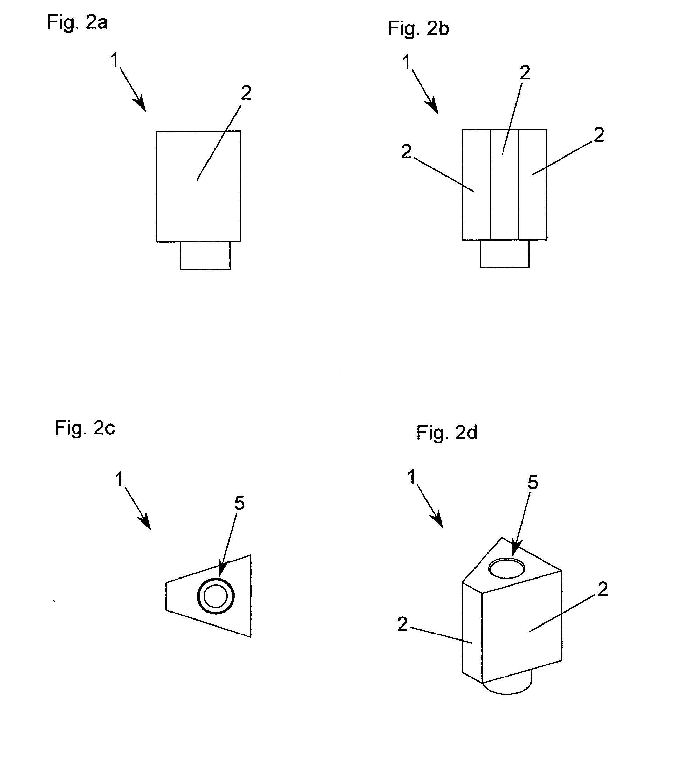

Es sind des Weiteren eine Seitenansicht (Figur 2a), eine Vorderansicht (Figur 2b), eine Draufsicht (Figur 2c) sowie eine perspektivische Darstellung (Figur 2d) des Scanbodys 1 gezeigt. Auch hier sind Scanflächen 2 sowie die Ausnehmung 5 zu erkennen. Der Scanbody 1 und insbesondere die Scanflächen 2 sind in diesem Ausführungsbeispiel einstückig aus Aluminium gefräst und anschließend mittels des im Beispiel beschriebenen Eloxal-Verfahrens weiß gefärbt.

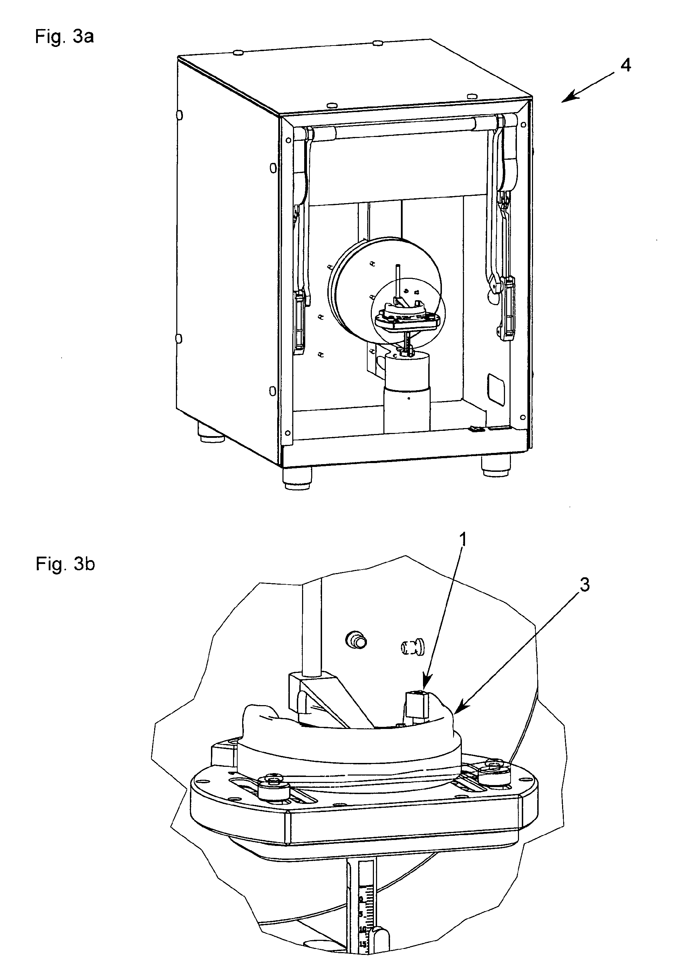

Figuren 3a und 3b zeigen den optischen Scanner 4, in welche der Aufbau aus den Figuren 1a bis 1c fixiert wurde. Dies ist genauer in der Detaildarstellung in Figur 3b zu erkennen.

Eine Schwierigkeit bei der anodischen Oxidation von Aluminium besteht darin eine Oberfläche zu erzielen, welche weiß und so matt wie möglich ist. Mit dem nachfolgend dargestellten Beispiel kann dies erreicht werden.

### Beispiel:

Um die Beschichtung durchzuführen werden folgende Geräte benötigt:
- Heiz- und Rührplatte,
- Labornetzteil (Je leistungsfähiger das Netzteil ist, desto besser funktioniert das Eloxieren.),
- Bechergläser für den Elektrolyt, zum Spülen und Beizen,
- Kabel mit Krokodilklemmen,
- Halterungen für die Pole sowie
- Niob als Material für die Kathoden bzw. Anoden.

Zur Bereitstellung des Elektrolyts werden die folgenden Stoffe in einem Becherglas vermengt und auf 60 °C erhitzt:
- 25g Kalium-Titanoxid-Oxalat-Dihydrat C₄K₂O₉Ti₂H₂O (CAS 14402-67-6),
- 6g Borsäure H₃BO₃,
- 0,6g Oxalsäure Dihydrat C₂H₂O₄ (CAS 6153-56-6) sowie
- 0,5l destilliertes Wasser H₂O.

Das Elektrolyt wird ständig gerührt - vorzugsweise mit einem Magnetrührer auf Stufe 1-3.

### Arbeitsschritte:

- Entfetten des Werkstücks mittels 5-10 prozentiger Natronlauge (wässrige Lösung von Natriumhydroxid NaOH): Der Scanbody 1 wird in der Natronlauge platziert und darin für etwa 15 Minuten gebeizt,
- Kurzes Spülen mit destiliertem Wasser,
- Anodische Oxidation: Das Kathodenmaterial wird mit dem Minuspol des Netzteils verbunden und im vorgeheitzten Elektrolyt platziert. Der zu behandelnde Scanbody 1 wird an einem Trägermaterial, das als Anode dient, ebenfalls in der Elektrolytlösung platziert.
- Das Netzteil wird bei einer Spannung von 124V und maximaler Stromstärke aktiviert. Durch die Schichtbildung fällt der Strom in Folge ab.
- Sobald sich der Stromstärke auf ca. 0,2 A eingependelt hat, wird diese 15 Minuten aufrecht erhalten, um die Schicht weiter wachsen zu lassen.
- Danach wird der Scanbody 1 aus dem Elektrolyt entnommen und unverzüglich mit Wasser und Aceton abgespült und mit Luft getrocknet

Die vorliegende Erfindung ist nicht auf die hier dargestellte Ausführungsform beschränkt. Beispielsweise ist es keineswegs notwendig, dass die Scanflächen 2 weiß gefärbt sind. Es ist ohne Weiteres denkbar, die Scanflächen 2 in einer anderen Farbe zu färben und den Scanner auf die andere Farbe abzustimmen.

## Patentansprüche

1. Scanbody geeignet zur Bestimmung einer Lage eines Zahnimplantates in einem Kiefer mit Hilfe eines Scanners (4), wobei der Scanbody (1) über wenigstens eine Scanfläche (2) zur Detektion durch den Scanner (4) verfügt, **dadurch gekennzeichnet, dass** die wenigstens eine Scanfläche (2) aus Metall gefertigt ist und dass die wenigstens eine Scanfläche (2) durch anodische Oxidation behandelt ist.

2. Scanbody nach Anspruch 1, **dadurch gekennzeichnet, dass** die wenigstens eine Scanfläche (2) aus - vorzugsweise im Wesentlichen reinen - Aluminium oder einer Aluminiumlegierung gefertigt ist.

3. Scanbody nach Anspruch 1 oder 2, **dadurch gekennzeichnet, dass** die wenigstens eine Scanfläche (2) mittels der anodischen Oxidation im Wesentlichen weiß gefärbt ist.

4. Scanbody nach wenigstens einem der Ansprüche 1 bis 3, **dadurch gekennzeichnet, dass** der Scanbody (1) über genau vier Scanflächen (2) verfügt.

5. Scanbody nach wenigstens einem der Ansprüche 1 bis 4, **dadurch gekennzeichnet, dass** der Scanbody (1) eine Ausnehmung (5) zur Befestigung an einem Zahnimplantat oder dem Abdruck (3) eines Zahnimplantats aufweist.

6. Verfahren zur Herstellung eines Scanbodys, **dadurch gekennzeichnet, dass** ein metallischer Körper des Scanbodys (1) mit wenigstens einer Scanfläche (2) gefertigt wird und die wenigstens eine Scanfläche (2) mittels anodischer Oxidation behandelt wird.

7. Verfahren nach Anspruch 6, **dadurch gekennzeichnet, dass** bei der anodischen Oxidation ein Elektrolyt verwendet wird, welches zwischen 5 g und 100 g, bevorzugt zwischen 25 g und 75 g und besonders bevorzugt 50 g, Kalium-Titanoxid-Oxalat-Dihydrat pro Liter H₂O aufweist.

8. Verfahren nach Anspruch 6 oder 7, **dadurch gekennzeichnet, dass** bei der anodischen Oxidation ein Elektrolyt verwendet wird, welches zwischen 1 g und 50 g, bevorzugt zwischen 5 g und 25 g und besonders bevorzugt 12 g, Borsäure pro Liter H₂O aufweist.

9. Verfahren nach einem der Ansprüche 6 bis 8, **dadurch gekennzeichnet, dass** bei der anodischen Oxidation ein Elektrolyt verwendet wird, welches zwischen 0,1 g und 10 g, bevorzugt zwischen 0,5 g und 5 g und besonders bevorzugt 1,2 g, Oxalsäure-Dihydrat pro Liter H₂O aufweist.

10. Verfahren nach einem der Ansprüche 6 bis 9, **dadurch gekennzeichnet, dass** der Scanbody (1) einstückig gefertigt wird.

11. Verfahren nach wenigstens einem der Ansprüche 6 bis 10, **dadurch gekennzeichnet, dass** der Scanbody (1) durch Drehen und/oder Fräsen gefertigt wird.

12. Verfahren nach wenigstens einem der Ansprüche 6 bis 11, **dadurch gekennzeichnet, dass** die wenigstens eine Scanfläche (2) durch Sandstrahlen behandelt wird.
